# EUROPEAN PATENT APPLICATION

(11) **EP 4 852 208 A1**
(43) Date of publication of application: **09.12.2026**
(21) Application number: 25857229.6
(22) Date of filing: 29.07.2025
(51) Int. Cl.: H01M 50/59, H01M 50/588, H01M 10/6551, H01M 50/342, H01M 50/502, H01M 50/178, H01M 50/249

(54) **BATTERY MODULE, AND BATTERY PACK AND VEHICLE COMPRISING SAME**

(30) Priority: 21.08.2024 KR 20240112081
(71) Applicant: LG Energy Solution, Ltd., Seoul 07335 (KR)
(72) Inventor: LEE, Won-Kyu, Daejeon 34122 (KR); JUNG, Hye-Mi, Daejeon 34122 (KR)
(74) Representative: BCKIP Part mbB
(86) International application number: PCT/KR2025/011273
(87) International publication number: WO 2026/043143

(57) **Abstract**

The present disclosure relates to a battery module that includes: a plurality of battery cells; a module case configured to accommodate the plurality of battery cells; a busbar frame accommodated in the module case and provided on at least one side of the plurality of battery cells; a plurality of busbars provided in the busbar frame and configured to be electrically connected to the plurality of battery cells; and a short-circuit prevention member configured to prevent contact between adjacent busbars.

## Description

### TECHNICAL FIELD

The present disclosure relates to a battery module, and a battery pack and vehicle including the same. More specifically, it relates to a battery module with enhanced safety.

This application is based on and claims priority from Korean Patent Application No. 10-2024-0112081, filed on August 21, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity

Meanwhile, since battery cells undergo chemical reactions during charging and discharging, their performance may deteriorate if they are used at a temperature higher than an appropriate temperature, and if the heat is not controlled to the appropriate temperature, unexpected ignition or explosion is more likely to occur. In addition, battery modules are structured to store these battery cells densely within a module housing. Therefore, if a thermal event occurs in a battery cell, high-temperature gases or flames emitted from the battery cell may spread to adjacent battery cells, causing a chain reaction of explosions and posing a serious safety hazard.

In particular, when a battery module includes multiple battery cells, the high-temperature gases, flames, and sparks generated during thermal runaway in a specific cell are highly likely to be ejected toward the front and rear side of the battery cell where the electrode leads of the relevant battery module are located, and/or toward the upper portion of the battery cell.

This may cause thermal damage to components located at both ends of the battery module, such as the components adjacent to end plates or busbar frames, and may lead to structural collapse. In particular, the busbar frame, made of plastic that is relatively vulnerable to heat, may melt during the thermal runaway in a battery cell. In this case, the busbar frame structure that supports the busbars or electrode leads may be lost, so that adjacent busbars, or the busbars and the electrode leads may come into contact with each other, thereby resulting in a short circuit.

Therefore, there is a need to develop a structure capable of preventing short circuits by preventing contact between adjacent busbars, even when the busbar frame melts during a thermal event in a battery cell.

### DISCLOSURE

### Technical Problem

The present disclosure is designed to solve the problems of the related art, and therefore the present disclosure is directed to providing a battery module capable of preventing short circuits by preventing contact between adjacent busbars when a thermal event occurs in a battery cell, thereby improving safety and reliability.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module including: a plurality of battery cells; a module case configured to accommodate the plurality of battery cells; a busbar frame accommodated in the module case and provided on at least one side of the plurality of battery cells; a plurality of busbars provided in the busbar frame and configured to be electrically connected to the plurality of battery cells; and a short-circuit prevention member configured to prevent contact between adjacent busbars.

The short-circuit prevention member may be configured to cover outer surfaces of at least some of the plurality of busbars.

The short-circuit prevention member may be configured in the shape of a plate.

The short-circuit prevention member may have a plurality of through-holes formed to discharge venting gas generated from the battery cell therethrough.

The short-circuit prevention member may include a material capable of transmitting heat.

The short-circuit prevention member may include a protrusion configured to be at least partially inserted between adjacent busbars.

The protrusion may be configured to extend along a longitudinal direction of the busbar.

The short-circuit prevention member may be configured to be coupled to the busbar frame.

Each of the plurality of battery cells may include an electrode lead configured to pass through the busbar frame and be electrically connected to the busbar, and the short-circuit prevention member may be configured to press the electrode lead toward the busbar.

The short-circuit prevention member may be configured to be secured between the busbar and the module case.

In another aspect of the present disclosure, there is provided a battery pack including a battery module according to the present disclosure.

In another aspect of the present disclosure, there is provided a vehicle including a battery module according to the present disclosure.

### Advantageous Effects

According to one aspect of the present disclosure, in the event of an abnormal condition in a battery cell, the gap between adjacent busbars can be stably maintained, thereby preventing electrical shorts between the busbars.

In particular, according to one aspect of the present disclosure, electrical or structural collapse can be prevented between the battery cells, thereby effectively preventing or delaying the propagation of thermal runaway in the battery module. Therefore, in this case, the safety and reliability of the battery module including multiple battery cells can be ensured.

Therefore, according to one aspect of the present disclosure, it becomes possible to prevent or delay events resulting from thermal runaway, such as fire or explosion, in a battery pack including multiple battery modules or a device equipped with them.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery module according to an embodiment of the present disclosure.
FIG. 2 is an exploded perspective view of a battery module according to an embodiment of the present disclosure.
FIG. 3 is a cross-sectional view of a battery module when viewed from above according to an embodiment of the present disclosure, which may be a cross-sectional view, for example, taken along line I - I' in FIG. 1.
FIG. 4 is a drawing illustrating a state where a busbar frame has melted in a battery module according to an embodiment of the present disclosure.
FIG. 5 is drawing illustrating a comparative example in which a battery module does not have a short-circuit prevention member according to an embodiment of the present disclosure.
FIG. 6 is a front perspective view illustrating the interior of a battery module according to an embodiment of the present disclosure.
FIG. 7 is a front perspective view of a short-circuit prevention member included in a battery module according to an embodiment of the present disclosure.
FIG. 8 is a rear perspective view of a short-circuit prevention member included in a battery module according to an embodiment of the present disclosure.
FIG. 9 is a partially enlarged view of a short-circuit prevention member included in a battery module according to an embodiment of the present disclosure.
FIG. 10 is an enlarged cross-sectional view of a battery module when viewed from above according to an embodiment of the present disclosure.
FIG. 11 is a cross-sectional view of a battery module according to an embodiment of the present disclosure, which may be a cross-sectional view, for example, taken along line II - II' in FIG. 1.
FIG. 12 is an exploded view of a short-circuit prevention member included in a battery module according to an embodiment of the present disclosure.
FIG. 13 is a drawing illustrating the coupling structure of a busbar frame and a short-circuit prevention member in a battery module according to an embodiment of the present disclosure.
FIG. 14 is a cross-sectional view of a battery module according to an embodiment of the present disclosure, which may be a cross-sectional view, for example, taken along line III - III' in FIG. 1.
FIG. 15 is an exploded view of some components of a battery module according to an embodiment of the present disclosure.
FIG. 16 is a drawing illustrating the coupling structure of a short-circuit prevention member and a module case in a battery module according to an embodiment of the present disclosure.
FIG. 17 is a schematic perspective view of a battery pack including a battery module according to an embodiment of the present disclosure.
FIG. 18 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front(ward), and back(ward) are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

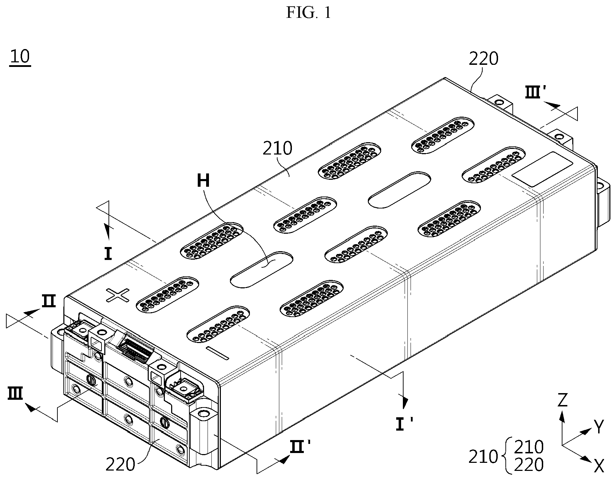

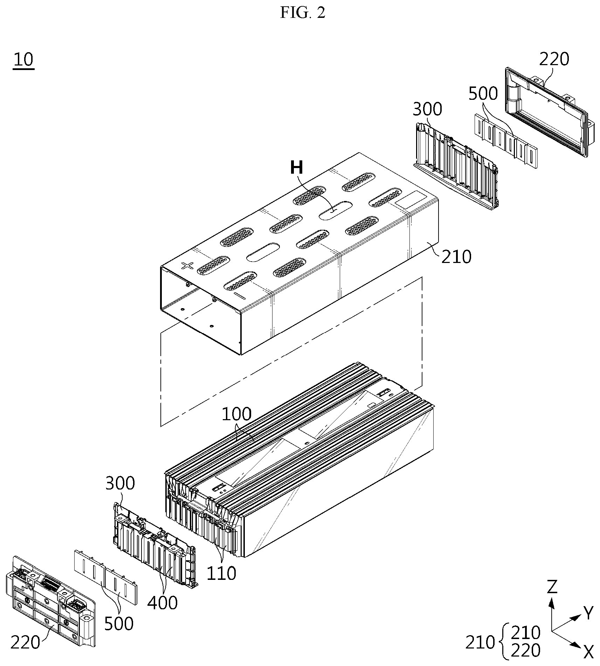

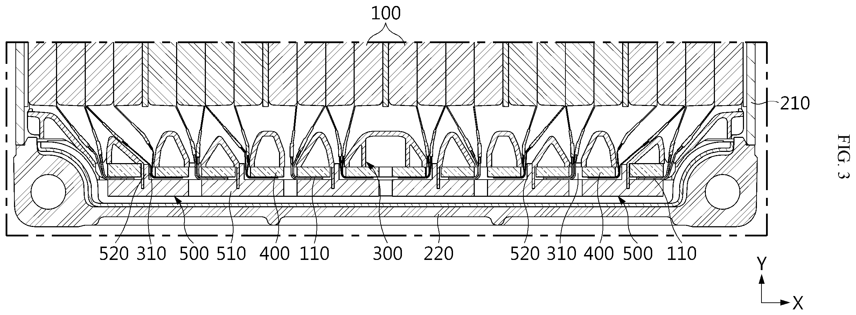

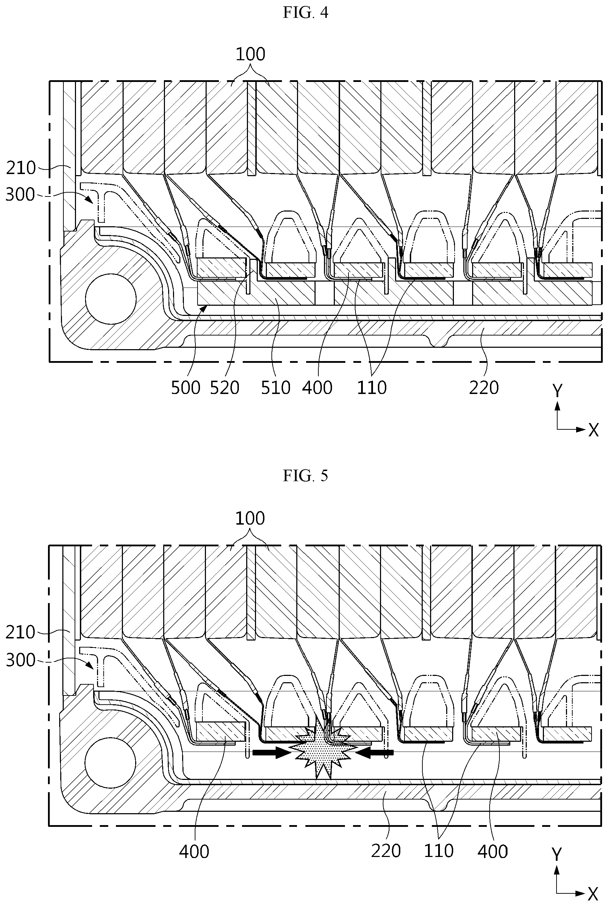

FIG. 1 is an overall perspective view of a battery module according to an embodiment of the present disclosure, and FIG. 2 is an exploded perspective view of a battery module according to an embodiment of the present disclosure. FIG. 3 is a cross-sectional view of a battery module when viewed from above according to an embodiment of the present disclosure, which may be a cross-sectional view, for example, taken along line I - I' in FIG. 1. In addition, FIG. 4 is a drawing illustrating a state where a busbar frame has melted in a battery module according to an embodiment of the present disclosure.

Referring to FIGS. 1 to 3, a battery module 10 according to an embodiment of the present disclosure includes a battery cell 100, a module case 200, a busbar frame 300, a busbar 400, and a short-circuit prevention member 500.

Referring to FIG. 2, a plurality of battery cells 100 may be included. In addition, each of the plurality of battery cells 100 may have an electrode lead 110. Specifically, the plurality of battery cells 100 may include an electrode assembly, a cell case accommodating the electrode assembly, and an electrode lead 110 connected to the electrode assembly and extending outward from the cell case to function as an electrode terminal.

A pair of electrode leads 110 may be provided, and the pair of electrode leads 110 may extend outward from both ends of the battery cell 100, i.e., in the longitudinal direction (±Y-axis directions). In this case, the pair of electrode leads 110 may be a positive electrode lead and a negative electrode lead. The battery cell 100 may be configured such that two electrode leads 110 are located only at one end in the Y-axis direction, for example, at the +Y-axis end, as necessary.

The battery cell 100 may be a pouch-type secondary battery. Such a pouch-type secondary battery may be configured in the form of a pouch in which a cell case is formed by sandwiching a metal layer made of aluminum between polymer layers.

As illustrated in FIG. 2, the plurality of battery cells 100 may be disposed side by side in the front-back direction (Y-axis direction) while standing in the vertical direction (Z-axis direction).

The present disclosure is not limited to a specific type or shape of the battery cell 100, and various battery cells 100 known at the time of filing the present disclosure may be applied. In the present embodiment, although a pouch-type secondary battery with high energy density and easy stacking will be described as shown in the drawing, it is obvious that a cylindrical or prismatic secondary battery may also be applied to the battery cell 100.

The module case 200 may be configured to accommodate a plurality of battery cells 100. Specifically, an inner space may be formed in the module case 200, and a plurality of battery cells 100 may be stored in the inner space.

The busbar frame 300 may be configured to cover at least one side of the plurality of battery cells 100. In the present embodiment, as shown in FIG. 2, the busbar frame 300 may be coupled to the front and rear sides of the plurality of battery cells 100. The busbar frame 300 may be injection-molded using an electrically insulating material, such as plastic.

The busbar frame 300 may be configured to allow electrode leads to pass through it. For example, the busbar frame 300 may include a lead slot 310. The lead slot 310 may be configured to allow at least some of the electrode leads 110 of the plurality of battery cells 100 to pass through it. The lead slot 310 may be configured to allow the plurality of electrode leads 110 to pass through it in the +Y- or -Y-axis direction (the front-back direction).

To this end, the lead slot 310 may be located on the side of the plurality of battery cells 100 where the electrode leads 110 are provided, and a plurality of lead slots 310 may be provided to be spaced apart from each other along the stacking direction of the battery cells 100.

In this case, the plurality of electrode leads 110 passing through the lead slots 310 may be configured to be bent and stacked. This structure in which the electrode leads 110 are bent while being in contact with each other may allow the plurality of battery cells 100 to be electrically connected to each other.

The busbar 400 may be provided on the busbar frame 300. The busbar 400 may be provided on the outer surface of the busbar frame 300. The busbar 400 may be fixed to the busbar frame 300 by bolting.

The busbar 400 may be electrically connected to the electrode lead 110. The electrode leads 110 passing outward through the busbar frame 300 may be stacked and provided on the outer surface of the busbar 400. Through this electrical connection, the busbar 400 may be configured to transmit status information about the battery cells 100 to an external component. For example, the busbar 400 may be configured to transmit voltage information about the battery cell 100 to an external control device, such as a BMS (Battery Management System).

The busbar 400 may be made of an electrically conductive material for transmission of electrical signals. For example, the busbar 400 may be configured as a material such as copper or aluminum.

A plurality of busbars 400 may be provided. The plurality of busbars 400 may be arranged to be spaced apart from each other in the stacking direction of the battery cells 100. In addition, the busbar 400 may be configured so as to ensure sufficient contact area with the electrode lead 110. For example, the busbar 400 may have a flat inner surface and extend in the up-down direction.

FIG. 5 is drawing illustrating a comparative example in which a battery module does not have a short-circuit prevention member according to an embodiment of the present disclosure.

When thermal runaway occurs in a battery cell 100, high-temperature thermal energy, gases, or flames may be generated. As a result, the busbar frame 300 adjacent to the battery cell 100 may be exposed to a high-temperature environment and the internal temperature of the busbar frame 300 may rise to a certain level or more, leading to ignition of the battery cell 100, so that the busbar frame 300 may melt and no longer structurally support the busbar 400. In this case, as disclosed in the comparative example illustrated in FIG. 5, adjacent busbars 400 may come into contact with each other, causing an electrical short, which may lead to a chain reaction of fires among the battery cells 100.

In particular, when the busbars 400 are arranged side by side in the stacking direction of the battery cells 100 (e.g., the X-axis direction in FIG. 5) within the battery module, the collapse of the busbar frame 300 may cause the busbars 400 to rotate left and right (in the X-axis direction), increasing the risk of contact with adjacent busbars 400.

To prevent this, the battery module 10 according to an embodiment of the present disclosure may further include a short-circuit prevention member 500, as disclosed in the embodiment shown in FIGS. 3 and 4. The short-circuit prevention member 500 may be configured to prevent contact between adjacent busbars 400. Therefore, even if the busbar frame 300 melts in a high-temperature environment, such as a thermal runaway situation, as disclosed in the embodiment shown in FIG. 4, the short-circuit prevention member 500 may prevent a short circuit between adjacent busbars 400.

The short-circuit prevention member 500 may be configured to maintain a spaced arrangement of the busbars 400. For example, the short-circuit prevention member 500 may be configured to be inserted into or pass through the space between the busbars 400, thereby fixing the positions of the busbars 400 in a thermal runaway situation.

The short-circuit prevention member 500 may include a material with excellent heat resistance. In addition, the short-circuit prevention member 500 may include a material with excellent flame retardancy. In addition, the short-circuit prevention member 500 may include a material with excellent insulating properties. For example, the short-circuit prevention member 500 may include a silicone or aerogel material. Alternatively, the short-circuit prevention member 500 may include a mica material. However, the material of the short-circuit prevention member 500 is not limited to the aforementioned materials, and any material capable of maintaining its shape during thermal runaway of the battery cell 100 may be applied to the short-circuit prevention member 500.

In addition, the short-circuit prevention member 500 may include a material having a higher melting point than the busbar frame 300. Accordingly, even if the busbar frame 300 begins to melt during thermal runaway of the battery cell 100, the short-circuit prevention member 500 does not melt and thus maintains its shape.

According to the above-implemented configuration of the present disclosure, since the short-circuit prevention member 500 is provided, the gap between adjacent busbars 400 may be stably maintained in the event of thermal runaway of the battery cell 100. Therefore, the busbars 400 may be prevented from contacting each other and cause a short circuit, thereby maintaining the electrically stable structure of the battery module 10.

As a result, electrical or structural collapse between the battery cells 100 may be prevented, thereby effectively preventing or delaying the propagation of thermal runaway of the battery module 10. Therefore, according to the aspect of the present disclosure, the safety and reliability of the battery module 10 may be ensured.

Referring to FIG. 2 and other drawings, the module case 200 may include a case body 210 and an end plate 220. The case body 210 may be configured to accommodate the battery cells 100. The case body 210 may be made of rigid and heat-resistant metal to physically and chemically protect the contained battery cells 100.

In this case, the case body 210 may have front and back openings. For example, the case body 210 may be configured as a mono-frame. For example, the case body 210 may be configured as a rectangular tube with an upper surface, a lower surface, a left surface, a right surface, and front and back openings.

In addition, the module case 200 may include an end plate 220 provided on the front and back openings of the case body 210. The end plate 220 may be welded to the case body 210. Although not illustrated for convenience, the end plate 220 may be configured such that, for example, an inner surface is made of an insulating material and an outer surface is made of a metal material. In addition, the end plate 220 may be partially provided with holes or slits for exposing components that are required to be exposed to the outside, such as a positive electrode terminal and negative electrode terminal or a connector of the battery module 10.

In addition, the module case 200 may be formed in various other shapes. For example, the module case 200 may include a box-shaped lower case having an upper opening and an upper cover configured to cover the upper opening of the lower case. Alternatively, the case body 210 may be provided as a U-frame. For example, the case body 210 may be provided to cover both lateral sides and the bottom side of the plurality of battery cells 100. The case body 210 may include a left plate and a right plate covering both lateral sides of the plurality of battery cells 100, and a lower plate covering the bottom side of the plurality of battery cells 100. In addition, the left plate, right plate, and lower plate may be configured in an integrated form.

As disclosed in the embodiment shown in FIGS. 1 and 2, the module case 200 may have venting holes H that enable venting directed in a specific direction. For example, a plurality of venting holes H may be formed on the upper surface of the case body 210, enabling upward venting of the battery module 10 through the venting holes H. Alternatively, unlike the above embodiment, the venting holes H may be formed in the end plate 220, enabling venting directed toward the rear of the battery module 10.

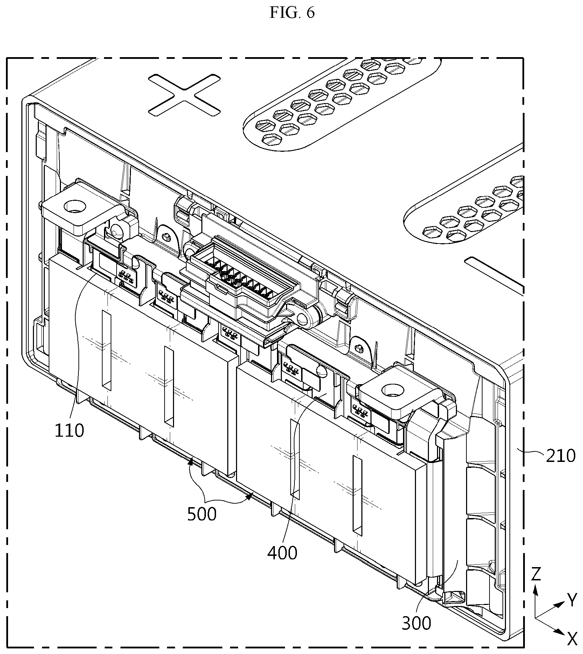

FIG. 6 is a front perspective view illustrating the interior of a battery module according to an embodiment of the present disclosure.

In this case, the short-circuit prevention member 500 may be located outside the busbar frame 300 and the busbar 400. For example, the short-circuit prevention member 500 may be provided on the front side of the busbar frame 300 and busbar 400, which are positioned at the front, as illustrated in FIG. 6. In addition, the short-circuit prevention member 500 may be provided on the rear side of the busbar frame 300 and busbar 400, which are positioned at the rear.

In addition, the short-circuit prevention member 500 may be configured to face the busbar 400. The short-circuit prevention member 500 may be configured to face the electrode lead 110 provided on the outer side of the busbar 400. The short-circuit prevention member 500 may be provided to cover the electrode lead 110.

According to the above-implemented configuration of the present disclosure, since the short-circuit prevention member 500 is configured to cover the outer surface of the busbar 400, it becomes possible to prevent high-temperature venting gas or flame from flowing over the short-circuit prevention member 500 to the busbar 400 when a thermal event occurs in the battery module 10. As a result, venting gas or flame may be prevented from being discharged toward the front or rear of the battery module 10. Therefore, venting directed toward the venting hole H may be further induced. To this end, the short-circuit prevention member 500 may include a material with excellent fire resistance.

Specifically, the short-circuit prevention member 500 may be configured to cover the outer surfaces of at least some of the plurality of busbars 400. The short-circuit prevention member 500 may be configured to cover all of the plurality of busbars 400. Alternatively, a plurality of short-circuit prevention members 500 may be provided. In this case, the plurality of short-circuit prevention members 500 may be configured to respectively cover the busbars 400. The plurality of short-circuit prevention members 500 may be provided along the arrangement direction of the busbars 400.

Each short-circuit prevention member 500 may be provided to correspond to several busbars 400. For example, as disclosed in the embodiment illustrated in FIG. 6, two short-circuit prevention members 500 may be configured to cover three busbars 400, including the busbar 400 provided at the outermost side, and a portion of one busbar 400.

According to the above-implemented configuration of the present disclosure, when a thermal event occurs in a specific battery cell 100, a short-circuit prevention member 500 corresponding to the battery cell 100 may block a local flame. In addition, in the above-implemented configuration, the negative effects of flames may not be transmitted to other separated short-circuit prevention members 500.

In addition, according to the above-implemented configuration of the present disclosure, since a plurality of short-circuit prevention members 500 are provided to be separate, the number or shape of the short-circuit prevention members 500 may be flexibly modified depending on the shape or size of the front surface of the busbar frame 300 and the number of busbars 400. Therefore, the assembly efficiency and productivity of the battery module 10 may be improved.

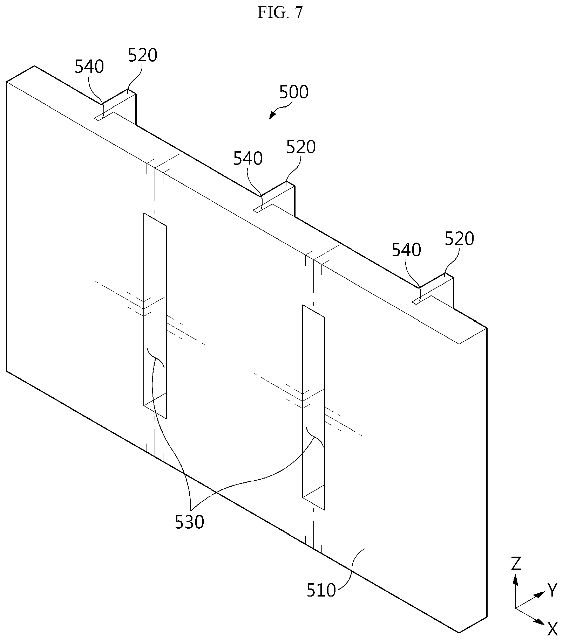

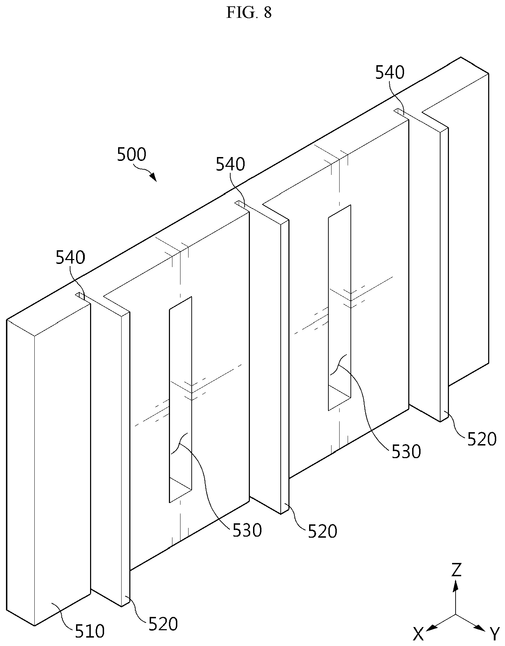

FIG. 7 is a front perspective view of a short-circuit prevention member included in a battery module according to an embodiment of the present disclosure, and FIG. 8 is a rear perspective view of a short-circuit prevention member included in a battery module according to an embodiment of the present disclosure.

Referring to FIGS. 7 and 8, the short-circuit prevention member 500 may be configured in the shape of a plate. The short-circuit prevention member 500 may be configured in the shape of a plate that covers the outer side of the busbar 400. The short-circuit prevention member 500 may be configured to face the busbar 400 in parallel. The short-circuit prevention member 500 may be configured in the shape of a plate that vertically stands.

According to the above-implemented configuration of the present disclosure, since the short-circuit prevention member 500 is configured in the shape of a plate, it becomes possible to easily attain the structure that faces the busbars 400 and partitions the busbars 400.

The short-circuit prevention member 500 may include a body 510 configured in the shape of a plate. The body 510 may have a square shape.

The short-circuit prevention member 500 may have a through-hole 530 formed therein. The through-hole 530 may be formed by perforating a portion of the body 510. The through-hole 530 may be configured to discharge venting gas generated from the battery cell 100. A plurality of through-holes 530 may be provided. The plurality of through-holes 530 may be arranged to be spaced apart from each other along the direction in which the busbars 400 are arranged. The through-hole 530 may be provided at a position corresponding to a hole formed in the busbar 400.

According to the above-described embodiment of the present disclosure, heat generated from the battery cell 100 may be discharged to the outside through the through-hole 530, thereby delaying or suppressing thermal runaway of the battery cells 100. In addition, according to the above-implemented configuration of the present disclosure, since the through-hole 530 is formed in the body 510, heat conduction convection may be formed in the body 510 around the through-hole 530. Therefore, thermal propagation between the battery cells 100 may be delayed.

As a more specific example, the short-circuit prevention member 500 may include a material capable of transmitting heat. For example, the short-circuit prevention member 500 may include a thermally conductive resin material, such as a thermal resin.

According to the above-implemented configuration of the present disclosure, since a thermal propagation path is formed during thermal runaway of the battery cells 100, thermal propagation between the battery cells 100 may be further delayed. In particular, a large amount of heat may be generated from the electrode lead 110 of the battery cell 100. According to the above-implemented configuration of the present disclosure, the heat of the electrode lead 110 may be dispersed by the short-circuit prevention member 500 in contact with the electrode lead 110.

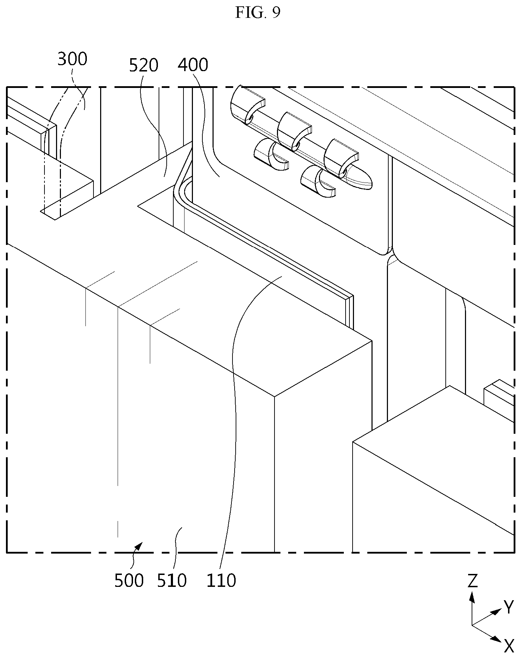

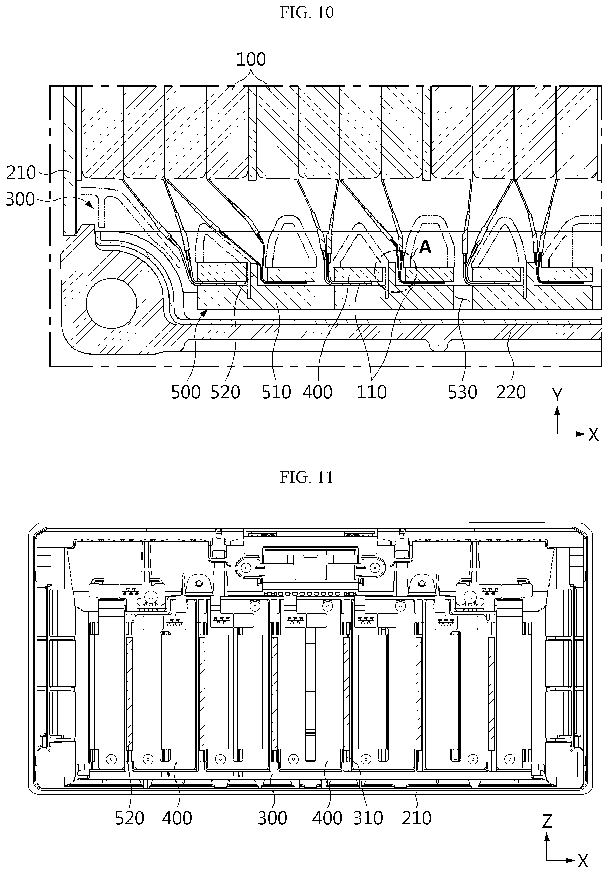

FIG. 9 is a partially enlarged view of a short-circuit prevention member included in a battery module according to an embodiment of the present disclosure, and FIG. 10 is an enlarged cross-sectional view of a battery module when viewed from above according to an embodiment of the present disclosure. In addition, FIG. 11 is a cross-sectional view of a battery module according to an embodiment of the present disclosure, which may be a cross-sectional view, for example, taken along line II - II' in FIG. 1.

FIGS. 9 and 10 illustrate a case where the busbar frame 300 has melted due to the heat caused by a thermal event occurring in the battery module 10. Referring to FIGS. 9 to 11, the structure of the short-circuit prevention member 500 for preventing short circuits between the busbars 400 will be described in more detail.

Referring to FIGS. 9 to 11, the short-circuit prevention member 500 may include a protrusion 520. The protrusion 520 may be configured to protrude from the body 510 toward the busbar 400. Referring to part A in FIG. 10, the protrusion 520 may be configured to be at least partially inserted between adjacent busbars 400. In addition, the protrusion 520 may be provided between the electrode lead 110 and the busbar 400.

When a thermal event occurs in the battery module 10 and the busbar frame 300 melts, the protrusion 520 may physically separate and partition the adjacent busbars 400 and/or the busbar 400 and the bent electrode lead 110. Therefore, when a thermal event occurs in the battery module 10 or an impact is applied, the busbar 400 and/or the electrode lead 110 may be prevented from contacting each other and causing a short circuit.

In addition, the protrusion 520 may be configured to press the bent electrode lead 110 toward the busbar 400 (particularly, in the left-right direction). As a result, according to the above-implemented configuration of the present disclosure, the electrode lead 110 may be brought into closer contact with the busbar 400, thereby maintaining a stable electrical connection.

In addition, referring to FIG. 11, the protrusion 520 may be configured to extend along the longitudinal direction of the busbar 400. That is, the protrusion 520 may be configured to extend in the vertical direction.

According to the above-implemented configuration of the present disclosure, the protrusion 520 configured to extend along the longitudinal direction of the busbar 400 may further separate and partition the adjacent busbars 400. Therefore, short circuits between the adjacent busbars 400 may be more effectively prevented.

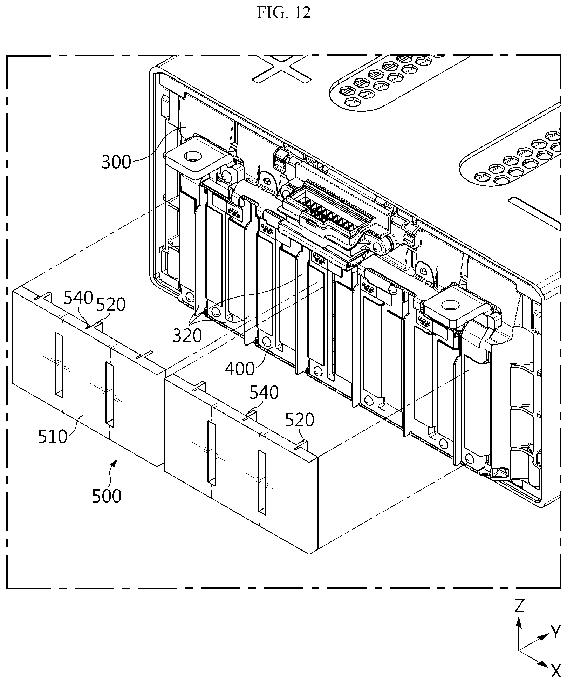

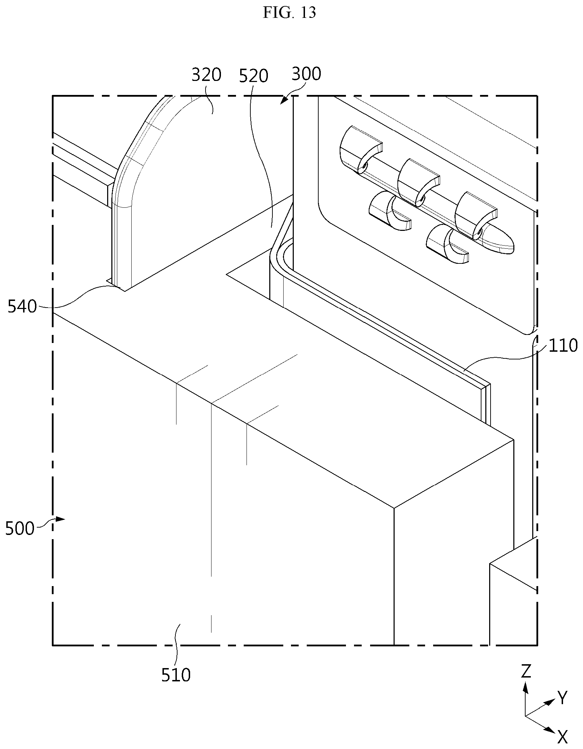

FIG. 12 is an exploded view of a short-circuit prevention member included in a battery module according to an embodiment of the present disclosure, and FIG. 13 is a drawing illustrating the coupling structure of a busbar frame and a short-circuit prevention member in a battery module according to an embodiment of the present disclosure.

Referring to FIGS. 12 and 13, the short-circuit prevention member 500 may be configured to be coupled to the busbar frame 300. In an embodiment, at least a portion of the busbar frame 300 may be configured to be inserted into the short-circuit prevention member 500.

More specifically, referring to FIG. 12, the busbar frame 300 may include a coupling protrusion 320. The coupling protrusion 320 may be configured such that a portion of the busbar frame 300 protrudes from the outer surface. The coupling protrusion 320 may be configured to partition the electrode leads 110 or the busbars 400. In addition, the partition structure of the busbar frame 300 may also serve to support the terminal.

A plurality of coupling protrusions 320 may be provided. The plurality of coupling protrusions 320 may be arranged at predetermined intervals along the arrangement direction of the busbars 400. The distance between adjacent coupling protrusions 320 may be configured to correspond to the width of the busbar 400. The protruding length of the coupling protrusion 320 from the busbar frame 300 may be configured to be greater than the thickness of the busbar 400.

For example, the implemented configuration of FIG. 12 shows the example in which seven busbars 400 are partitioned by six coupling protrusions 320 provided on the busbar frame 300.

The coupling protrusions 320 may partition adjacent busbars 400 before the busbar frame 300 melts. Therefore, when a thermal event does not occur in the battery cell 100, contact between the busbars 400 and/or the electrode leads 110 may be prevented, thereby suppressing electrical shorts.

In this case, the coupling protrusion 320 may be configured to be inserted into the short-circuit prevention member 500. Specifically, referring to FIGS. 12 and 13, the short-circuit prevention member 500 may have a coupling groove 540. A plurality of coupling grooves 540 may be provided at positions corresponding to the coupling protrusions 320. The coupling groove 540 may be configured such that the end of the coupling protrusion 320 is inserted thereinto. For example, the coupling groove 540 may be provided in a shape and size corresponding to the end of the coupling protrusion 320. In addition, the coupling groove 540 may be provided adjacent to the protrusion 520.

According to the above-described embodiment of the present disclosure, the short-circuit prevention member 500 may be stably coupled to the busbar frame 300, thereby enhancing the joint strength between the short-circuit prevention member 500 and the busbar frame 300. In addition, according to the above-implemented configuration of the present disclosure, the busbars 400 provided on the outer side of the busbar frame 300 may be more clearly separated, thereby improving the effect of preventing short circuits between the busbars 400 by the short-circuit prevention member 500.

Meanwhile, as described above, at least a portion of the electrode lead 110 may pass through the lead slot 310 and reach the outer side of the busbar 400. Specifically, the plurality of battery cells 100 may have a plurality of electrode leads 110, and at least some of the plurality of electrode leads 110 may pass through the lead slot 310 and then be bent so as to be stacked on each other.

In this case, the short-circuit prevention member 500 may be provided on the outer side of the electrode lead 110. The short-circuit prevention member 500 may be configured to press the electrode lead 110 toward the busbars 400. Specifically, the stacked electrode leads 110 may be pressed against the busbars 400 by the inward pressing force of the short-circuit prevention member 500.

According to the above-implemented configuration of the present disclosure, the stacked electrode leads 110 and the busbars 400 may be fixed while being in contact with each other by the short-circuit prevention member 500. In particular, the close contact between the electrode lead 110 and the busbar 400 may be more stably maintained.

In addition, according to the above-implemented configuration of the present disclosure, when multiple electrode leads 110 are stacked in contact with the busbar 400, the short-circuit prevention member 500 may further ensure close contact between the plurality of electrode leads 110. Therefore, the electrical connection between the electrode leads 110 may be more stable.

In addition, according to the above-implemented configuration, welding between the busbar 400 and the electrode leads 110 may be omitted, which may facilitate the manufacturing process of the battery module 10. Therefore, manufacturing costs and time for the battery module 10 may be reduced, and productivity may be improved. In addition, according to the above-implemented configuration, the safety of the battery module 10 may be further improved during use.

In another aspect of the present disclosure, when flames or the like are emitted from the front and rear sides of the battery cell 100 through the busbar frame 300, the short-circuit prevention member 500 may further support the busbars 400 to withstand the internal pressure.

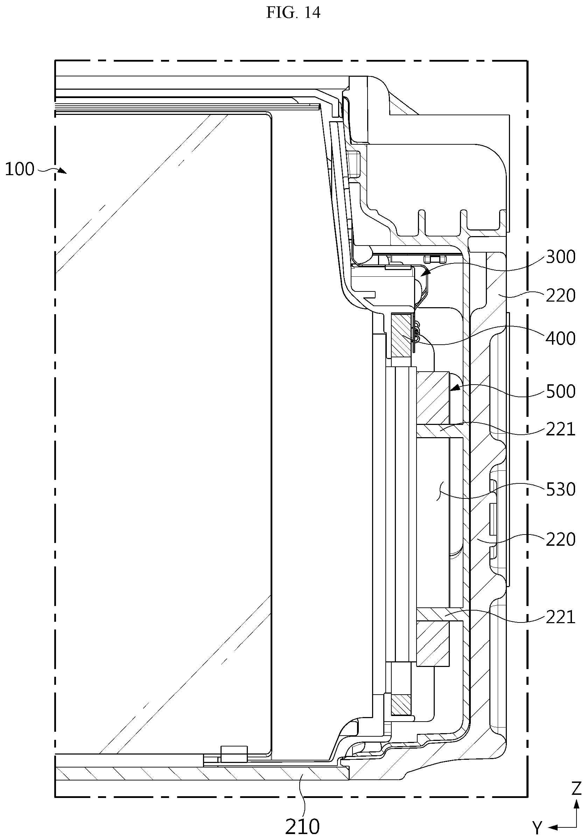

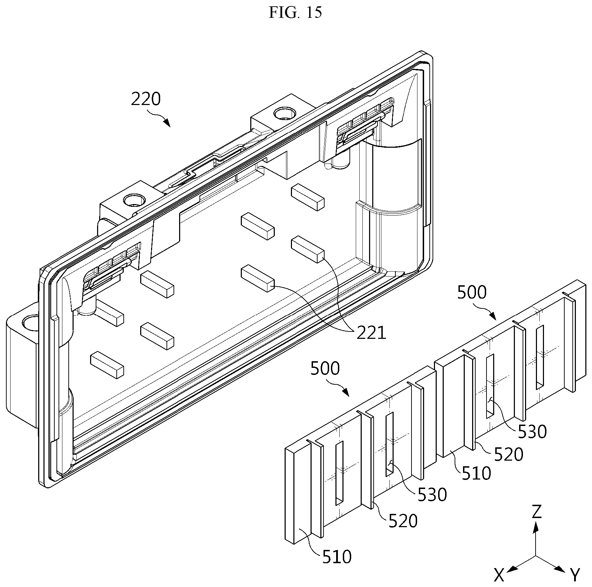

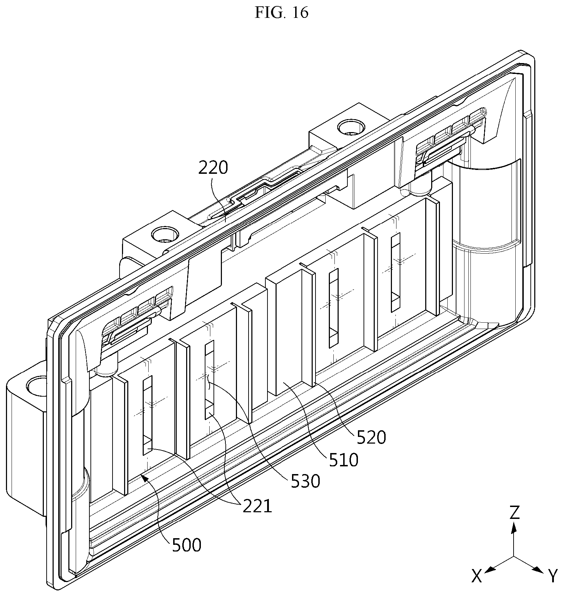

FIG. 14 is a cross-sectional view of a battery module according to an embodiment of the present disclosure, which may be a cross-sectional view, for example, taken along line III - III' in FIG. 1. In addition, FIG. 15 is an exploded view of some components of a battery module according to an embodiment of the present disclosure, and FIG. 16 is a drawing illustrating the coupling structure of a short-circuit prevention member and a module case in a battery module according to an embodiment of the present disclosure.

When a thermal event occurs in the battery module 10 and the busbar frame 300 melts, a structure may be required to support the short-circuit prevention member 500. To this end, according to an embodiment of the present disclosure, the short-circuit prevention member 500 may be configured to be fixed between the busbar 400 and the module case 200. The short-circuit prevention member 500 may be configured to be coupled to the module case 200. In particular, the short-circuit prevention member 500 may be configured to be coupled to the end plate 220.

As a specific example, the end plate 220 may include a support 221. The support 221 may be configured such that the end plate 220 at least partially protrudes from the inner surface inward (toward the short-circuit prevention member 500). The support 221 may be configured to be inserted into the through-hole 530 of the short-circuit prevention member 500. The protruding length of the support 221 from the inner surface of the end plate 220 may correspond to the thickness of the short-circuit prevention member 500. In addition, the size of the support 221 may correspond to the size of the through-hole 530.

A plurality of supports 221 may be provided. A plurality of supports 221 may be provided for each through-hole 530. The support 221 may be configured to support both sides of each through-hole 530. Accordingly, the short-circuit prevention member 500 may be secured and fixed to the support 221.

According to the above-implemented configuration of the present disclosure, since the support 221 is inserted into the through-hole 530 of the short-circuit prevention member 500, the movement of the short-circuit prevention member 500 in all directions-upward, downward, leftward, and rightward-may be restricted. Therefore, even if the busbar frame 300 melts, the contact prevention function between the short-circuit prevention member 500 and the busbar 400 may be maintained. In addition, even when an impact or heat is applied to the battery module 10, its structural stability may be maintained.

In addition, in this case, the end plate 220 may be configured to press the short-circuit prevention member 500 toward the busbar 400. Specifically, the short-circuit prevention member 500 may be further pressed against the busbar 400 by the inward pressing force exerted by the end plate 220. Therefore, the short-circuit prevention member 500 may further partition adjacent busbars 400.

In addition, since the support 221 is provided, the assembly position of the end plate 220 may be guided when assembling the battery module 10, thereby improving the assembly efficiency of the battery module 10.

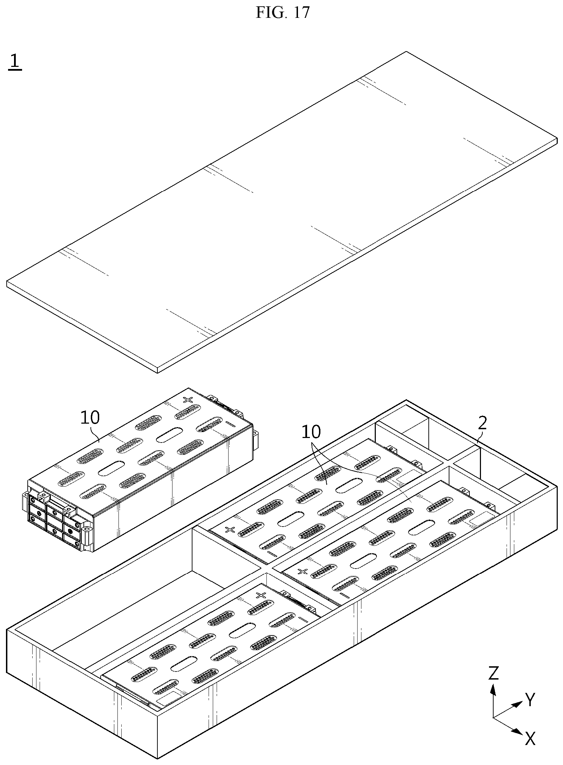

FIG. 17 is a schematic perspective view of a battery pack including a battery module according to an embodiment of the present disclosure.

Referring to FIG. 17, a battery pack 1 according to an embodiment of the present disclosure may include one or more battery modules 10 according to an embodiment of the present disclosure, as described above. The battery pack 1 according to the present disclosure may further include a pack case 2 for accommodating a BMS (Battery Management System), a current sensor, and a fuse for integrated control of charging and discharging of one or more battery modules, as well as the aforementioned components.

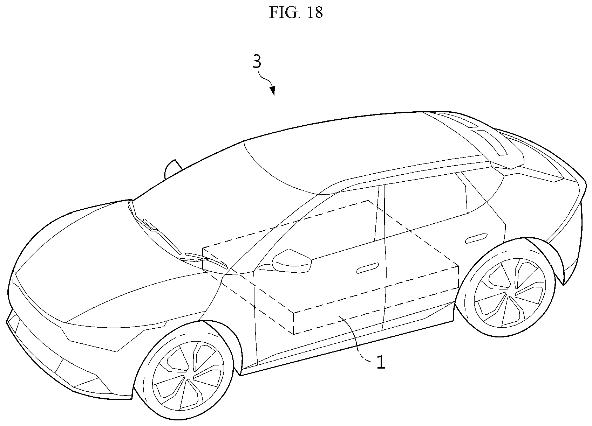

FIG. 18 is a schematic perspective view of a vehicle including a battery pack according to an embodiment of the present disclosure.

Referring to FIG. 18, a vehicle 3 according to an embodiment of the present disclosure may include one or more battery packs 1 according to an embodiment of the present disclosure or battery modules 10 according to an embodiment of the present disclosure. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 operates by receiving power from the battery pack 1 or battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module comprising:
a plurality of battery cells;
a module case configured to accommodate the plurality of battery cells;
a busbar frame accommodated in the module case and provided on at least one side of the plurality of battery cells;
a plurality of busbars provided in the busbar frame and configured to be electrically connected to the plurality of battery cells; and
a short-circuit prevention member configured to prevent contact between adjacent busbars.

2. The battery module of claim 1,
wherein the short-circuit prevention member is configured to cover outer surfaces of at least some of the plurality of busbars.

3. The battery module of claim 1,
wherein the short-circuit prevention member is configured in the shape of a plate.

4. The battery module of claim 1,
wherein the short-circuit prevention member has a plurality of through-holes formed to discharge venting gas generated from the battery cell therethrough.

5. The battery module of claim 1,
wherein the short-circuit prevention member comprises a material capable of transmitting heat.

6. The battery module of claim 1,
wherein the short-circuit prevention member comprises a protrusion configured to be at least partially inserted between adjacent busbars.

7. The battery module of claim 6,
wherein the protrusion is configured to extend along a longitudinal direction of the busbar.

8. The battery module of claim 1,
wherein the short-circuit prevention member is configured to be coupled to the busbar frame.

9. The battery module of claim 1,
wherein each of the plurality of battery cells comprises an electrode lead configured to pass through the busbar frame and be electrically connected to the busbar, and
wherein the short-circuit prevention member is configured to press the electrode lead toward the busbar.

10. The battery module of claim 1,
wherein the short-circuit prevention member is configured to be secured between the busbar and the module case.

11. A battery pack comprising a battery module of any one of claims 1 to 10.

12. A vehicle comprising a battery module of any one of claims 1 to 10.
